# EUROPEAN PATENT APPLICATION

(11) **EP 2 314 173 A1**
(43) Date of publication of application: **27.04.2011**
(21) Application number: 10187480.8
(22) Date of filing: 13.10.2010
(51) Int. Cl.: A23L 1/314, A23L 1/318

(54) **Meat Additive, Pickling Liquid and Processed Meat Product**

(30) Priority: 21.10.2009 JP 2009242216
(71) Applicant: Shin-Etsu Chemical Co., Ltd., Chiyoda-ku, Tokyo (JP)
(72) Inventor: Fukasawa, Miyuki, Chiyoda-ku Tokyo (JP); Hayakawa, Kazuhisa, Joestsu-shi Niigata (JP); KURIBAYASHI, Daisuke, Osaka Niigata (JP)
(74) Representative: Jones, Helen M.M.

(57) **Abstract**

Provided are a meat additive and a pickling liquid for producing a processed meat product having an enhanced water retention capacity when heated and therefore having an excellent texture. More specifically, provided are a meat additive comprising at least water-soluble cellulose ether which turns into a gel when heated, a pickling liquid comprising the meat additive, and a meat processed product comprising the food additive. Also provided is a method for producing a processed meat product comprising at least the steps of: adding the meat additive or the pickling liquid to meat and heating the meat to which the meat additive or the pickling liquid has been added, at a gelling temperature or higher wherein the gelling temperature is of the water-soluble cellulose comprised by the meat additive or pickling liquid.

## Description

### BACKGROUND OF THE INTENTION

### 1. Field of the Invention

The present invention relates to an additive and a pickling liquid for meats such as livestock, fish and shellfish meats each of which comprises water-soluble cellulose ether that turns into a gel when heated; and a processed meat product having an improved texture by using the additive or the liquid.

### 2. Description of the Related Art

In a processed meat product which uses a lump of meat such as steak, grilled meat and fried chicken as it is, or uses a relatively large piece into which it is sliced or cut, there has been observed a phenomenon that due to leakage of a meat juice from it by heating, a yield is reduced, the processed meat product becomes hard and lose their original texture such as soft or juicy texture. Such a phenomenon not only deteriorates the commercial value of the processed meat product but also causes a large industrial loss due to a reduction in yield.

With a view to overcoming such problems, there has been made various attempts to produce a certain effect for softening meat or give a juicy texture thereto by injecting a polysaccharide, a plant protein, powdered skim milk, an egg white, cellulose powder, a starch, or the like, or combination thereof into the meat or dipping the meat in a pickling liquid.

For example, there are proposed a method comprising the steps of impregnating meat with a pickling liquid obtained by mixing an edible oil or fat containing 1,3-stearoyl-2-oleylglyceride, an unsaturated diglycerol fatty acid ester, an organic acid monoglyceride and a thermally coagulable protein, and coarsening the crystals of the oil or fat to cause demulsification (JP 2000-50794); a method comprising a step of injecting, into meat, a pickling liquid containing a water-insoluble starch, a powdered oil or fat, and curdlan (JP 2001-258511); a method comprising a step of adding an O/W emulsion containing an edible oil or fat and a polyglycerol fatty acid ester having an HLB of 11 or greater in a pickling liquid (JP 03-277250/1991); and a method comprising a step of using a pickling liquid containing a flowable oil or fat composition containing an edible oil or fat and a diglycerol unsaturated fatty acid ester and/or a triglycerol unsaturated acid ester, and oil/fat powder (JP 2007-267647).

However, the methods described above are not industrially convenient and have not yet produced satisfactory results.

### SUMMARY OF THE INVENTION

An object of the present invention is to overcome the above-described problems during meat processing, enhance the water retention capacity when a processed meat product is heated, and alleviate the problem of the hardened texture when a curdlan which turns into a gel by heat is used. Consequently, a meat additive or a pickling liquid capable of providing an excellent texture, and a processed meat product comprising the meat additive or the pickling liquid are provided.

With a view to achieving the above-described object, the present inventors have carried out an extensive investigation. As a result, it has been found that by subjecting a lump or slice of raw material meat to dipping in or injection of a solution or pickling liquid of a meat additive comprising water-soluble cellulose ether that turns into a gel when heated and then to heating, the obtained processed meat product shows significantly improved water retention during heating and excellence in texture, leading to the completion of the invention.

In the present invention, there are provided a meat additive comprising at least water-soluble cellulose ether that turns into a gel when heated, a pickling liquid comprising the meat additive, and a processed meat product comprising the meat additive or the pickling liquid. In the present invention, there is also provided a method for producing a processed meat product comprising at least the steps of adding the meat additive or the pickling liquid to meat, and heating the meat to which the meat additive or the pickling liquid has been added, at a gelling temperature or higher, wherein the gelling temperature is of the water-soluble cellulose comprised by the meat additive or the pickling liquid.

The meat additive, the pickling liquid for meat, or the meat product comprising the meat additive or the pickling liquid according to the present invention can enhance water retention of the meat product during heating, increase the yield of the meat product, and can provide a juicy texture.

### DETAILED DESCRIPTION OF THE PREFERRED EMBODIMENTS

The present invention will hereinafter be described more specifically.

The term "meat" as used herein includes not only an edible meat of birds and animals but also an edible meat of fish and shellfish. The present invention provides a meat additive comprising at least water-soluble cellulose ether that turns into a gel when heated. This meat additive may be added, as an aqueous solution, directly to a lump of meat. The meat additive may be preferably added to meat as a pickling liquid comprising the meat additive.

The term "pickling liquid" usually means a seasoning liquid to be injected into a lump of meat, to be used in tumbling of a lump of meat, and to be used in dipping a lump of meat therein. Many of pickling liquids comprise a seasoning such as salt or sugar used for seasoning a lump of meat therewith, and/or a polysaccharide such as starch or an oil or fat in order to improve the texture of the meat after heating. The pickling liquid is usually added for the purpose of preventing deterioration of the texture of a lump of meat or reduction in yield which will otherwise occur because a water component and an oil component are separated from the gap between meat fibers when the lump of meat is heated. Although some documents distinguish a pickling liquid from a saumur liquid in the production of smoked products and the like, the present specification uses the term "pickling liquid" in a wide sense so that the pickling liquid comprises a saumur liquid. A saumur liquid may be considered as a base salt solution which is thick salt water used as a base for forming a pickling liquid.

According to the present invention, the meat additive or pickling liquid comprises water-soluble cellulose ether which can turn into a gel when heated. The water-soluble cellulose ether which can turn into a gel when heated may preferably include methyl cellulose having a methyl group and hydroxyalkylalkyl cellulose having a small amount of a hydroxyalkyl group such as a hydroxypropyl group or a hydroxyethyl group introduced in addition to a methyl group or an ethyl group. Methyl cellulose and hydroxypropylmethyl cellulose are particularly preferred examples. The water-soluble cellulose ether may be used alone or in admixture of two or more thereof.

When the water-soluble cellulose ether which can turn into a gel when heated is added to the meat additive or pickling liquid, the pickling liquid having the water-soluble cellulose ether dissolved therein turns into a gel by heating, fills a gap of meat tissues to which the water-soluble cellulose ether has been added, prevents release of a meat juice which is produced during heating, and thereby improves the yield. In addition, the water-soluble cellulose ether relaxes the gel state as a temperature decreases so that the processed meat product can provide a juicy texture when eaten.

Water-soluble methyl cellulose (for example, gelling temperature: 50°C, dissolution temperature: 20°C) having a degree of methoxyl substitution of from about 19 to 32% by weight is preferred as the above-described methyl cellulose. Hydroxypropylmethyl cellulose (gelling temperature: from 70 to 80°C, dissolution temperature: from 30 to 40°C) having a degree of methoxyl substitution of from 19 to 32% by weight and a degree of hydroxypropoxyl substitution of from 4 to 12% by weight; hydroxyethylmethyl cellulose (gelling temperature: from 70 to 80°C, dissolution temperature: from 35 to 55°C) having a degree of methoxyl substitution of from 19 to 32% by weight and a degree of hydroxyethoxyl substitution of from 4 to 12% by weight; or hydroxyethylethyl cellulose (gelling temperature: 63°C, dissolution temperature: 60°C) having a degree of ethoxyl substitution of from 5 to 20% by weight and a degree of hydroxyethoxyl substitution of from 4 to 60% by weight is preferred as the hydroxyalkylalkyl cellulose. It may be used alone or in admixture of two or more thereof.

The degree of substitution can be measured in accordance with the Zeisel-GC method described in J.G. Gobler, E.P. Samsel, and G.H. Beaber, Talanta, 9 474(1962). It can also be measured in accordance with the method using a gas chromatograph described in methyl cellulose in the Japanese Standards of Food Additives or the method of measuring the degree of substitution of methyl cellulose and hydroxypropylmethyl cellulose as specified in the Japanese Pharmacopoeia.

The molecular weight of the water-soluble cellulose ether of the present invention is not limited insofar as it is high enough for the aqueous solution of the cellulose ether to turn into a gel by heating and then return to the aqueous solution by cooling as described above. The molecular weight can be specified by the viscosity of a 2% by weight aqueous solution at 20°C, correlating with the molecular weight, as described in J. polym. sci., 39, 293-298, 1982. The viscosity of a 2% by weight aqueous solution at 20°C can be measured using an Ubbelohde viscometer as specified in Japanese Industrial Standards (JIS) K2283-1993. The water-soluble cellulose ether of the present invention has a viscosity of preferably 15 mPa·s or greater, more preferably from about 100 to 100,000 mPa·s from the standpoint of improving the water retention and exhibiting a function expected in the present invention at a lower amount of the cellulose ether.

The content of the water-soluble cellulose ether capable of turning into a gel when heated, in a solution (preferably, an aqueous solution) of the meat additive or in the pickling liquid, is preferably from 0.1 to 5% by weight, especially preferably from 0.1 to 2% by weight, wherein the content means the content of the water-soluble cellulose ether when it is used alone, while the content means the total content of two or more water-soluble cellulose ethers when they are used in admixture. When the content is less than 0.1% by weight, there may be a possibility that the water-soluble cellulose ether produces neither a sufficient water retention enhancement effect during heating nor a sufficient texture improvement effect due to prevention of a meat juice loss. When the content is more than 5% by weight, the water-soluble cellulose ether may change the original texture of a food material because the high viscosity of the water-soluble cellulose ether may be imparted to the food material.

A method of adding the food additive comprising at least the water-soluble cellulose ether to a pickling liquid can be selected, depending on the types of the other raw materials to be used. A known method of adding it to the pickling liquid can be employed. More specifically, powder blending, wherein the powder of the water-soluble cellulose ether and the other powdery raw materials are blended, may be carried out and the blended powders may be added to water or subjected to addition of water. An aqueous solution comprising from 0.1 to 5 parts by weight, especially from 0.1 to 2 parts by weight of the water-soluble cellulose ether may be subjected to addition of the other powdery raw materials. A powder of the water-soluble cellulose ether may be added to a pickling liquid heated to a high temperature, dispersed and then cooled.

The water-soluble cellulose ether comprised by the meat-additive-containing liquid or the pickling liquid may be preferably in a dissolved state because it can be present uniformly in the liquid.

The meat additive and the pickling liquid are not particularly limited insofar as they contain water-soluble cellulose ether which can turn into a gel and the kind and content of the other component or components do not excessively inhibit their intended effects. For example, they may comprise one or more components, as the other component or components, selected from foods such as salts and sugars, and food additives such as sugar alcohols, starches, proteins, milk products, thickeners, calcium agents, alkali agents, pH regulators, emulsifiers, enzymes, salts, spices, colorants, sweeteners and acidulants.

Although the processed meat products of the present invention are not particular limited, they are suitable to dishes or ingredients of the dishes using meat (including fish and shellfish) which are foods stored at room temperature, chilled foods, frozen foods, thawed foods or re-heated foods. Specific examples include meat products such as grilled meat, steak, deep-fried pork, deep-fried beef, curry, stew, fried chicken, hams (such as roast ham), and fried products, grilled fish and white fish fry.

The present invention provides a method for producing a processed meat product comprising at least the steps of adding to meat a food additive or pickling liquid comprising at least water-soluble cellulose ether, and heating the meat to which the meat additive or pickling liquid has been added, at a gelling temperature or higher wherein the gelling temperature is of the water-soluble cellulose ether.

The method of adding the meat additive or pickling liquid to meat can be selected, depending on the raw materials and processing methods. A known method of adding it to meat can be used. Examples may include a method of injecting a solution (preferably an aqueous solution) of the food additive or the pickling liquid to meat; a method of carrying out tumbling to allow the whole meat to hold a solution (preferably, an aqueous solution) of the meat additive or the pickling liquid; and a method of dipping the whole meat in a solution (preferably an aqueous solution) of the meat additive or the pickling liquid.

The heating temperature at which the meat-containing the meat additive or the pickling liquid is heated is not limited insofar as it is suited for cooking of each raw material meat. The gelling temperature of the water-soluble cellulose ether or the temperature higher than the gelling temperature may be preferred. The heating temperature is 55°C or higher when methyl cellulose is used, while it is 70°C or higher when hydroxypropylmethyl cellulose is used.

### EXAMPLES

The present invention will next be described by Examples and Comparative Examples in detail. However, it should not be construed that the present invention is limited to or by them.

### <Example 1>

Powders of 2 parts by weight of superfine sugar, 1 part by weight of sodium glutamate, 0.5 part by weight of salt, 0.3 part by weight of sodium phosphate, 0.1 part by weight of black pepper, and 0.2 part by weight of methyl cellulose (methoxy group: 29% by weight, viscosity of a 2.0% by weight aqueous solution at 20°C as measured using an Ubbelohde viscometer specified in JIS K2283-1993: 4000 mPa·s, product of Shin-etsu Chemical) were blended.

The blended powders were added to 94.9 parts by weight of water. Further, 0.1 part by weight of grated garlic was added thereto and the resulting mixture was stirred. The powders were heated for dissolution and the pickling liquid thus obtained was cooled to 5°C in a refrigerator.

After 500 parts by weight of raw meat (a lump of pork) was dipped in 100 parts by weight of the pickling liquid thus obtained and was rubbed lightly with hands for 30 seconds, it was marinated in the liquid for 18 hours while refrigerated at 5°C. The marinated raw meat was taken in a stainless steel strainer and was left to stand for 10 minutes. The pickling liquid remaining on the surface was wiped off and the weight of the meat portion was measured. Then, a frying pan was heated and the meat was roasted on both sides thereof on the pan for 2 minutes per side without putting oil in the pan. The meat juice released from the meat during roasting was removed and measurement of the weight of the meat portion and evaluation of the texture thereof were performed. The results are shown in Table 1.

### <Comparative Example 1>

In the same manner as in Example 1 except that methyl cellulose was not added to the pickling liquid, meat marinated in the pickling liquid was prepared and measurement of the weight of the roasted meat and evaluation of the texture were performed. The results are shown in Table 1.

### <Comparative Example 2>

In the same manner as in Example 1 except that not methyl cellulose but 0.2 part by weight of a curdlan (product of Kirin Kyowa Foods Company, limited) was added to the pickling liquid, meat marinated in the pickling liquid was prepared and measurement of the weight of the roasted meat and evaluation of the texture were performed. The results are shown in Table 1.

### <Comparative Example 3>

In the same manner as in Example 1 except that not methyl cellulose but 0.2 part by weight of xanthan gum was added to the pickling liquid, meat marinated in the pickling liquid was prepared and measurement of the weight of the roasted meat and evaluation of the texture were performed. The results are shown in Table 1.

**Table 1**

| | weight of lump of pork before marinated | weight of lump of pork after marinated | weight of lump of pork after roasted | texture of roasted meat |
|---|---|---|---|---|
| | (g) | (g) | (g) | |
| Example 1 | 500 | 580 | 575 | soft and juicy texture |
| Comp. Ex. 1 | 500 | 590 | 420 | dry texture |
| Comp. Ex. 2 | 500 | 570 | 550 | hard and gell-like texture of meat juices |
| Comp. Ex. 3 | 500 | 570 | 500 | dry texture |

As shown in Table 1, the meat marinated in the pickling liquid comprising methyl cellulose, had almost the same weights after and before roasting and the roasted meat provided a juicy texture. In Comparative Example 1, the meat marinated in the pickling liquid comprising no methyl cellulose, had the reduced weight after roasted due to loss of the meat juice during roasting and the roasted meat provided a dry texture. In Comparative Example 2, the pickling liquid comprising curdlan was used and the roasted meat was hard with a gel-like texture. In Comparative Example 3, the meat marinated in the pickling liquid comprising xanthan gum, had the largely reduced weight after roasted and the roasted meat provided a dry texture.

### <Example 2>

Powders of 2 parts by weight of polyphosphate salt, 4 parts by weight of salt, 4 parts by weight of sugar, 0.2 part by weight of sodium L-ascorbate, 1 part by weight of sodium glutamate, 0.05 part by weight of sodium nitrite, 3 parts by weight of casein and 0.5 part by weight of hydroxypropylmethyl cellulose (methoxy groups: 29% by weight, hydroxypropoxy groups: 6% by weight, viscosity of a 2.0% by weight aqueous solution at 20°C as measured using an Ubbelohde viscometer as specified in JIS K2283-1993: 4000 mPa·s, product of Shin-etsu Chemical) were blended. Water (85.25 parts by weight) was added to the blended powders for dissolution to obtain a pickling liquid comprising 0.5 part by weight of hydroxypropylmethyl cellulose.

The pickling liquid (100 parts by weight) comprising hydroxypropylmethyl cellulose was injected into 500 parts by weight of a pork loin by using an injection method. After the pork loin was tumbled in a rotary massager at 5°C for 15 hours, a total amount of the pork was filled in a casing, dried for one hour in a smokehouse, smoked at 70°C for one hour, and braised at 80°C for 2 hours. Subsequently, the meat was wrapped with a food wrapping film and refrigerated in a refrigerator for 3 hours.

The weight and texture after refrigeration were evaluated. The results are shown in Table 2.

### <Comparative Example 4>

In the same manner as in Example 2 except that hydroxypropylmethyl cellulose was not added to the powders, a processed meat product was prepared and the roasted product was evaluated. The results are shown in Table 2.

**Table 2**

| | weight of | weight of | weight of | texture of |
|---|---|---|---|---|
| | pork loin | pork loin | braised | roasted meat |
| | before | after | and cooled | |
| | injection | injection | pork loin | |
| | (g) | (g) | (g) | |
| Example 2 | 500 | 600 | 580 | Soft and |
| | | | | juicy texture |
| Comp. Ex. 4 | 500 | 600 | 400 | dry texture |

As shown in Table 2, the processed meat product obtained by processing with the pickling liquid comprising hydroxypropylmethyl cellulose had the almost same weights before and after braising and the resulting product provided a juicy texture. The processed meat product obtained by processing with the pickling liquid not comprising hydroxypropylmethyl cellulose had the reduced weight after processing due to loss of a meat juice during the smoking and the resulting product provided a dry texture.

## Claims

1. A processed meat product comprising a meat additive which comprises at least water-soluble cellulose ether which turns into a gel when heated.

2. The processed meat product according to claim 1, wherein said water-soluble cellulose ether is at least one selected from the group consisting of methyl cellulose, hydroxypropyl methyl cellulose, hydroxyethyl methyl cellulose or hydroxyethyl ethyl cellulose.

3. The processed meat product according to any preceding claim, wherein said water-soluble cellulose ether is methyl cellulose or hydroxypropyl methyl cellulose.

4. The processed meat product according to any preceding claim, wherein said water-soluble cellulose ether is methyl cellulose having a degree of methoxyl substitution of from 19% to 32% by weight.

5. The processed meat product according to claim 4, wherein said methyl cellulose has a gelling temperature of 50 °C.

6. The processed meat product according to any of claims 1 to 3, wherein said water-soluble cellulose ether is hydroxypropyl methyl cellulose having a degree of methoxyl substitution of from 19% to 32% by weight and a degree of hydroxypropyl substitution of from 4% to 12% by weight.

7. The processed meat product according to claim 6, wherein said hydroxypropyl methyl cellulose has a gelling temperature of from 70 °C to 80 °C.

8. The processed meat product according to any preceding claim, wherein said water-soluble cellulose ether has a viscosity of 15 mPa·s or greater, preferably from 100 to 100,000 mPa·s, when determined as a 2% by weight aqueous solution at 20 °C.

9. A pickling liquid comprising the meat additive as defined in any preceding claim.

10. A meat additive as defined in any of claims 1 to 8.

11. A method for producing a processed meat product, comprising at least the steps of:
adding the meat additive as defined in any of claims 1 to 8, or the pickling liquid according to claim 9, to the meat; and
heating the meat to which the meat additive or the pickling liquid has been added, at a gelling temperature or higher, wherein the gelling temperature is of the water-soluble cellulose comprised by the meat additive or the pickling liquid.

12. The method according to claim 11, wherein said gelling temperature is 55 °C or higher when methyl cellulose is said water-soluble cellulose ether.

13. The method according to claim 11, wherein said gelling temperature is 70 °C or higher when hydroxypropyl methyl cellulose is said water-soluble cellulose ether.
